# EUROPÄISCHE PATENTANMELDUNG

(11) **EP 4 793 731 A1**
(43) Veröffentlichungstag der Anmeldung: **19.08.2026**
(21) Anmeldenummer: 26159310.7
(22) Anmeldetag: 18.02.2026
(51) Int. Cl.: G05D 7/00

(54) **VENTILANORDNUNG ZUR STEUERUNG**

(30) Priorität: 18.02.2025 AT 501042025
(71) Anmelder: Herz Armaturen Ges.m.b.H., 1230 Wien (AT)
(72) Erfinder: Srbulovic, Elvis, 1190 Wien (AT)
(74) Vertreter: Wildhack & Jellinek Patentanwälte GmbH

(57) **Zusammenfassung**

Die Erfindung betrifft eine Ventilanordnung (1) zur Steuerung eines Stroms eines Heiz- oder Kühlfluids; insbesondere zu einem Heizkörper oder Wärmetauscher, umfassend:
- ein Gehäuse (2) mit einem Einlass (3) und einem Auslass (4), wobei zwischen Einlass (3) und Auslass (4) ein Thermostatventil (5) mit einem Ventilelement (6) und einem Ventilsitz (7), die als erster Drosselkörper ausgebildet sind, angeordnet ist und
- ein Durchflussregler (11), der zwischen dem Einlass (3) und dem Auslass (4) angeordnet ist und ein Regelventilelement (12) und einen Regelventilsitz (13) aufweist, wobei der Durchflussregler (11) die Druckdifferenz zwischen dem ersten Drosselkörper und dem Auslass (4) und damit den Durchfluss bei einem spezifischen Hub des Thermostatventils (5) aus dem Auslass (4) konstant hält, wobei der Durchflussregler (11) als Differenzdruckregler ausgebildet ist, der dem Thermostatventil (5) in Strömungsrichtung des Fluids nachgeordnet ist, und dass der Durchflussregler (11) eine Membran (15) zur Einstellung des Differenzdrucks aufweist an der das Regelventilelement (12) mit dieser verschieblich angeordnet ist.

## Beschreibung

Die vorliegende Erfindung betrifft eine Ventilanordnung zur Steuerung eines Stroms eines Heiz- oder Kühlfluids gemäß dem Oberbegriff des Patentanspruchs 1.

Aus dem Stand der Technik sind eine Vielzahl von Ventilanordnungen bzw. auch Thermostatventile bekannt, mit denen der Durchfluss aus einem Heizleitungssystem zu einem Heizkörper oder Wärmetauscher geregelt wird. Diese Thermostatventile weisen meistens einen Ventilsitz auf, gegenüber dem ein Ventilelement verstellbar angeordnet ist und einen Öffnungsbereich, je nach erforderlicher Wärmemenge bzw. Menge des Heizfluids, freigibt. Nachteil der aus dem Stand der Technik bekannten Thermostatventile ist dabei, dass diese meist einen komplexen Aufbau aufweisen. Weiters ist es bei den aus dem Stand der Technik bekannten Thermostatventilen meist nicht möglich, einen konstanten Differenzdruck über das Regelventil bzw. einen konstanten Durchfluss über den Heizkörper einzustellen, sodass bei Veränderung des Durchflusses innerhalb des Thermostatventils eine Druckveränderung in dem Leitungssystem auftritt und dadurch vor- oder nachgeschaltete Heizkörper ebenfalls beeinflusst werden.

Aufgabe der vorliegenden Erfindung ist es daher, eine Ventilanordnung bzw. ein Thermostatventil bereitzustellen, das eine einfache und genaue Regelung und Einstellung des Durchflusses des Fluids zu einem Heizkörper oder Wärmetauscher ermöglicht.

Diese Aufgabe wird bei einer Ventilanordnung gemäß dem Oberbegriff des Patentanspruchs 1 mit den kennzeichnenden Merkmalen gelöst:
Erfindungsgemäß ist dabei vorgesehen, dass der Durchflussregler als Differenzdruckregler ausgebildet ist, der dem Thermostatventil in Strömungsrichtung des Fluids nachgeordnet ist, und dass der Durchflussregler eine Membran zur Regelung und Einstellung des Differenzdrucks aufweist an der das Regelventilelement mit dieser verschieblich angeordnet ist.

Durch die erfindungsgemäßen Merkmale ist es einfach möglich, den Durchfluss über die Ventilanordnung bzw. nach dem zweiten Drosselkörper am Auslass konstant zu halten, da insbesondere der nach dem Thermostatventil angeordnete Differenzdruckregler eine sehr kompakte Bauform aufweist. Weiters ist es durch die erfindungsgemäße Anordnung des Durchflussreglers möglich, den Differenzdruck sehr genau zu regeln, da insbesondere der Druck nach dem Thermostatventil an dem Differenzdruckregler bzw. dem Durchflussregler anliegt und daher die Abstimmung zwischen der Öffnungsfeder des Durchflussreglers und der Membran des Durchflussreglers besonders genau und effektiv ist.

Mit der Anordnung des Thermostatventil vor dem automatischen Durchflussregler wird weiters auch verhindert, dass bei der beschädigten Membran des geschlossenen Thermostatventils zu einer Leckage bzw. zu einer unerwünschten und nicht bemerkten weiter Versorgung des Verbrauchers kommt.

Das in der erfindungsgemäßen Ventilanordnung verwendete Regelventilelement wird oft im Stand der Technik auch als Differenzdruckregel-Kolben bezeichnet.

Besonders vorteilhafte Ausführungsformen der erfindungsgemäßen Ventilanordnung werden durch die Merkmale der abhängigen Ansprüche näher definiert:
So ist eine vorteilhafte Ausführungsform der Ventilanordnung möglich, indem das Regelventilelement frei von Dichtungen in dem Thermostatventil verschieblich gelagert angeordnet ist. Insbesondere beim Stand der Technik erzeugen die vorhandenen Dichtungen im Differenzdruckregler eine Hysterese, sodass der beabsichtigte Differenzdruck von dem tatsächlichen Differenzdruck bzw. der beabsichtigte Durchfluss von dem tatsächlichen Durchfluss abweicht. Weiters ist es durch die dichtungsfreie Anordnung des Regelventilelements möglich, die Kräfte im Durchflussregler bzw. dem Regelventilelement gering zu halten, sodass die Öffnungsfeder des Durchflussreglers als auch die Membran sehr klein dimensioniert werden können und daher eine genauere und feinere Regelung des Differenzdrucks ermöglichen.

Eine bevorzugte Ausführungsform wird bereitgestellt indem, die Ventilanordnung einen Durchflussbegrenzer aufweist mit dem der Durchfluss über die Ventilanordnung begrenzbar ist, wobei der Durchflussbegrenzer dem Durchflussregler nachgeschaltet ist und zusammen einen automatischen Durchflussregler bilden. Durch den verstellbaren Durchflussbegrenzer ist es einfach möglich die Ventilanordnung bzw. den Durchfluss der Ventilanordnung an unterschiedliche Raumgrößen bzw. an den Bedarf an Wärmemenge im Verbraucher einzustellen. So kann mit einer Einzigen Ventilanordnung unterschiedlich große Heizkörper bzw. Verbraucher geregelt werden, indem der Durchflussbegrenzer verstellt und an die Gegebenheiten in den zu heizenden Räumen angepasst wird.

Eine bevorzugte, besonders kompakte Bauform der erfindungsgemäßen Ventilanordnung wird bereitgestellt, indem das Regelventilelement koaxial zu dem Ventilelement angeordnet und in dessen Achse verschieblich, relativ zum Ventilelement beweglich angeordnet ist. Vorteilhaft kann vorgesehen sein, dass das Thermostatventil vollständig in einer Kartusche angeordnet ist, die aus dem Gehäuse, insbesondere von einer einzigen Seite der Ventilanordnung, herausnehmbar ausgebildet ist, sodass durch Entfernen der Kartusche das Thermostatventil vollständig aus dem Gehäuse herausnehmbar ist. Durch die Anordnung des Thermostatventils bzw. der Ventilanordnung mit einer Kartusche ist es einfach möglich, das Thermostatventil und gegebenenfalls auch den Durchflussregler und gegebenenfalls auch den Durchflussbegrenzer in der Kartusche einfach vorzumontieren und dann in das Gehäuse der Ventilanordnung einzusetzen. So ist die Montage besonders einfach und auch Wartungsarbeiten, Austausch von Dichtungen oder auch der Austausch des ganzen Oberteils und die Einstellung oder Voreinstellung des Thermostatventils und des Durchflussbegrenzers bzw. der Ventilanordnung sind dabei besonders einfach möglich.

Um den Durchflussregler einfach in der Ventilanordnung bzw. im Thermostatventil einbauen und anordnen zu können, kann vorteilhaft vorgesehen sein, dass der Durchflussregler als Einsatz ausgebildet ist, der im Thermostatventil, insbesondere im Regelventilelement, angeordnet ist.

Eine vorteilhafte Ausführungsform sieht vor, dass die Membran zwischen dem Ventilelement und dem Regelventilelement angeordnet ist. Durch die Anordnung der Membran zwischen dem Ventilelement und dem Regenventilelement kann der Durchflussregler besonders kompakt ausgebildet werden und weiters wird die Membran in einer vorteilhaften Position mit dem Druck, der nach dem Thermostatventil bzw. dessen Ventilsitz vorliegt, einfach beaufschlagt. Um den Differenzdruck über den Durchflussregler besonders genau und einfach Regeln und damit den Durchfluss nach dem Durchflussbegrenzer am Auslass einfach konstant halten zu können, kann vorgesehen sein, dass eine Seite der Membran des Durchflussreglers in Strömungsrichtung des Fluids nach dem Ventilsitz des Thermostatventils angeordnet ist und mit dem Druck der nach dem Ventilsitz des Thermostatventils vorliegt beaufschlagbar ist und dass die zweite Seite der Membran mit einem Druckkanal mit dem Auslass druckübertragend verbunden ist und mit dem Druck im Auslass beaufschlagbar ist.

Vorteilhaft kann vorgesehen sein, dass die Öffnungsrichtung des Regelventilelements in Strömungsrichtung des Fluids über den Durchflussregler entspricht, sodass bei einem Riss oder Versagen der Membran das Regelventilelement durch den Druck des Fluids nach dem geöffneten Thermostatventil in die geöffnete Position drückbar ist und der Durchflussregler geöffnet bleibt. So kann bei Versagen der Membran das Regelventilelement trotzdem geöffnet bzw. offengehalten werden und die Ventilanordnung erlaubt weiter, dass Fluid durch dieses, bei Öffnen des Thermostatkopfes bzw. des Thermostatventils, durchtritt.

Eine besonders kompakte Bauform der Ventilanordnung wird bereitgestellt, indem der Durchflussregler eine Öffnungsfeder aufweist, mit der das Regelventilelement in Öffnungsrichtung mit einer Federkraft beaufschlagbar ist, wobei die Öffnungsfeder zwischen dem Regelventilelement und dem Ventilelement angeordnet und in einer im Ventilelement zentral ausgebildeten Öffnung abgestützt ist. Durch die Lagerung der Öffnungsfeder innerhalb des Ventilelements des Thermostatventils wird neben der kompakten Bauform auch ermöglicht, dass die Öffnungsfeder sehr schmal dimensioniert werden kann, geringe Kräfte erfordert und dadurch die Membran in Zusammenwirken mit der Öffnungsfeder geringe Druckunterschiede ausregelt und daher ein besonders exakter Differenzdruck ermöglicht wird.

Vorteilhaft kann vorgesehen sein, dass das Regelventilelement einen Begrenzungsfortsatz aufweist, der die maximale Öffnung des Durchflussregler begrenzt.

Eine besondere Ausführungsform der Ventilanordnung wird bereitgestellt, indem das Thermostatventil derart ausgebildet ist, dass im geschlossenen Zustand keine Druckdifferenz zwischen den beiden Seiten der Membran vorliegt. Derart wird die Membran geschont und nicht nur ständig von einer Seite mit größerem Druck beaufschlagt. Dies erhöht die Lebensdauer der Ventilanordnung und reduziert das Auftreten eines Versagens der Membran.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:
Fig. 1 zeigt eine erste Ausführungsform der Ventilanordnung in einer Schnittansicht im geschlossenen Zustand des Thermostatventils,
Fig. 1a zeigt eine Detailansicht auf die Voreinstellschürze des Durchflussbegrenzers in einer Draufsicht gemäß Fig 1,
Fig. 2 zeigt die Ausführungsform gemäß Fig. 1 in vollständig geöffneten Zustand des Thermostatventils,
Fig. 3 zeigt die Ausführungsform gemäß Fig. 1 und 2 in Betriebsposition,
Fig. 4 zeigt eine zweite Ausführungsform der erfindungsgemäßen Ventilanordnung als Eckausführung im geschlossenen Zustand des Thermostatventils,
Fig. 5 zeigt eine Schnittansicht gemäß Fig. 4 im geöffneten Zustand des Thermostatventils,
Fig. 6 zeigt die Ausführungsform gemäß Fig. 4 und 5 in Betriebsposition.

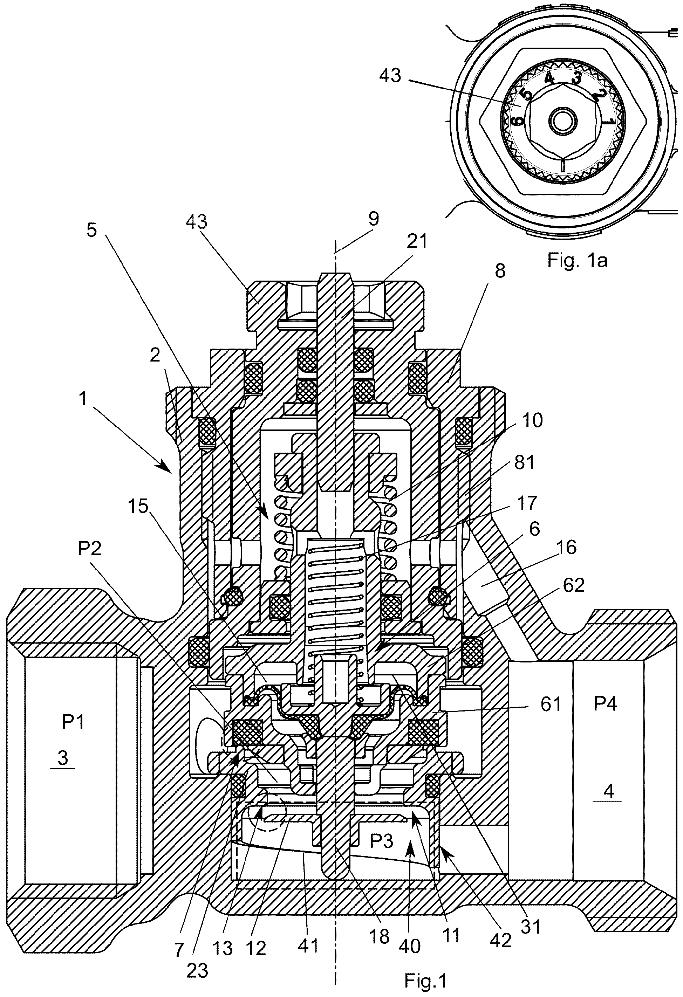

In Fig. 1 ist eine erste Ausführungsform der erfindungsgemäßen Ventilanordnung 1 in einer Schnittansicht dargestellt. Die Ventilanordnung 1 weist ein Gehäuse 2 auf, in dem ein Einlass 3 angeordnet ist, über den ein Heiz- oder Kühlfluid in die Ventilanordnung 1 eintritt. Weiters weist das Gehäuse 2 bzw. die Ventilanordnung 1 einen Auslass 4 auf, aus dem das Heiz- oder Kühlfluid dann einem Wärmetauscher oder Heizkörper zugeführt wird. In der Ventilanordnung 1 ist ein Thermostatventil 5 angeordnet, über das der Durchfluss vom Einlass 3 zum Auslass 4 mittels eines nicht dargestelltem Thermostatkopfs geregelt wird. Das Thermostatventil 5 weist ein Ventilelement 6 auf, das gegenüber einem Ventilsitz 7 entlang der Achse 9 verstellt wird. Das Ventilelement 6 und der Ventilsitz 7 bilden einen ersten Drosselkörper, über den der Druck P1 aus dem Einlass 3 auf den Druck P2 nach dem Thermostatventil 5 reduziert wird.

Die Ventilanordnung 1 weist weiters einen Durchflussregler 11 auf, mit dem der Differenzdruck zwischen dem ersten Drosselkörper und dem Auslass 4 geregelt wird und damit den Durchfluss bei einem spezifischen Hub des Thermostatventils 5 und bei gleichbleibender Voreinstellung des Durchflussbegrenzers, gekennzeichnet in der Fig. 1a durch die Symbole,,I" bis "6", aus dem Auslass 4 konstant hält. Der Durchflussregler 11 ist dabei als Differenzdruckregler ausgebildet und weist einen Regelventilsitz 13 und ein gegenüber dem Regelventilsitz 13 entsprechend der vorherrschenden Drücke automatisch verstellbares Regelventilelement 12 auf. Der Durchflussregler 11 ist bei der erfindungsgemäßen Ventilanordnung 1 dem Thermostatventil 5 in Strömungsrichtung des Fluids nachgeordnet, sodass das Regelventilelement 12 als auch der Regelventilsitz 13 in Bezug auf den Einlass 3 und den Auslass 4 nach dem Ventilsitz 7 des Thermostatventils 5 angeordnet sind. In der Ventilanordnung 1 ist weiters ein optionaler Durchflussbegrenzer 40 angeordnet, über den der maximale Durchfluss aus dem Auslass 4 eingestellt werden kann. Der Durchflussbegrenzer 40 weist eine Einstellkante 41 auf die das Durchtrittsfenster 42 vom Raum nach dem Durchflussregler 11 und den Auslass 4 begrenzt. Der Durchflussbegrenzer 40 bzw. die Einstellkante 41 wirkt dabei mit dem Durchtrittsfenster 42 als zweiter Drosselkörper. Über eine Voreinstellschürze 43 kann die Einstellkante 41 des Durchflussbegrenzers 40 relativ zum Durchtrittsfenster 42 verdreht werden und dadurch die Begrenzung des Durchflusses vergrößert oder verringert werden. Das Fluid fließt also beim Einlass 3 in die Ventilanordnung 1 ein, fließt dann über den Ventilsitz 7 des Thermostatventils 5, trifft dann auf den Durchflussregler 11 bzw. fließt zwischen dem Regelventilelement 12 und dem Regelventilsitz 13 weiter und dann über den Durchflussbegrenzer 40 zum Auslass 4 und sodann über diesen in einen Heizkörper oder Wärmetauscher bzw. den Verbraucher. Das Regelventilelement 12 ist über eine Membran 15 des Durchflussreglers 11 gehalten und wird über dieses entlang der Achse 9 des Thermostatventils 5 bzw. der Achse 9 des Ventilelements 6 durch die Membran 15, entsprechend des auf beiden Seiten der Membran 15 anliegenden Drucks P2-P4, automatisch verstellt. Das Regelventilelement 12 ist dabei koaxial in der Achse 9 mit dem Ventilelement 6 angeordnet und das Regelventilelement 12 wird in der Achse 9 relativ zum Ventilsitz 7 bzw. dem Regelventilsitz 13 durch die Druckdifferenz an der Membran 15 verstellt.

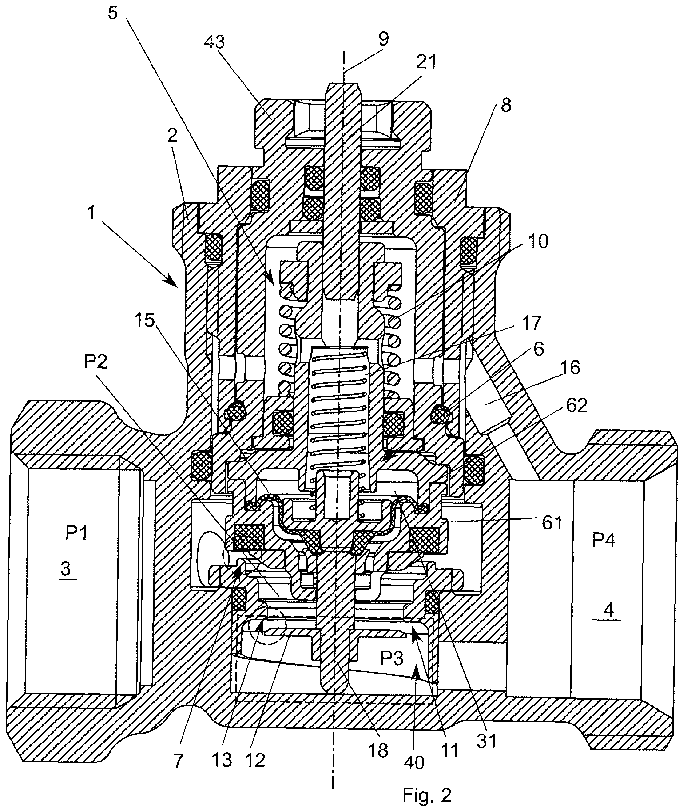

Im Folgenden wird anhand der Fig. 1 bis 3 die Funktion der ersten Ausführungsform der erfindungsgemäßen Ventilanordnung 1 schematisch beschrieben:
Das Thermostatventil 5 weist eine Druckfeder 10 auf, die zwischen dem Ventilelement 6 und dem Gehäuse 2 eingebaut ist und eine Kraft auf das Ventilelement 6 ausübt, sodass dieses, wie in Fig. 2 dargestellt, in die vollkommen geöffnete Stellung gedrückt wird, also der maximale Abstand zwischen dem Ventilsitz 7 und dem Ventilelement 6 vorliegt. Wird abhängig von der Raumtemperatur über einen nicht dargestellten Thermostatkopf eine Kraft über einen Betätigungsstift 21 an das Ventilelement 6 übertragen, wird dieses entgegen der Kraft der Feder 10 in Richtung des Ventilsitzes 7 gedrückt. Je nach Größe der über den Betätigungsstift 21 aufgebrachten Kraft bzw. der Raumtemperatur wird also der Spalt des ersten Drosselkörpers zwischen dem Ventilsitz 7 und dem Ventilelement 6 eingestellt und dadurch der Durchfluss durch die Ventilanordnung 1 vom Einlass 3 zum Auslass 4 geregelt. Beim Durchtritt des Fluids durch den ersten Drosselkörper bzw. zwischen Ventilsitz 7 und Ventilelement 6 wird dieses vom Druck P1 im Einlass 3 auf den Druck P2 hinter dem ersten Drosselkörper gedrosselt.

Fließt das Fluid nun vom Einlass 3 über den Ventilsitz 7 bzw. den ersten Drosselkörper in Richtung des Regelventilsitzes 13, strömt dieses je nach Stellung des Regelventilelements 12 über den Regelventilsitz 13 weiter. Je nach Voreinstellung mittels der Voreinstellschürze 43 des Durchflussbegrenzers 40 erfährt das Fluid eine weitere Druckminderung auf den Druck P3 und schließlich über den Durchflussbegrenzer 40 und den Auslass 4 aus der Ventilanordnung 1 hinaus bzw. einem Heizkörper oder Wärmetauscher zu. Am Durchflussbegrenzer wird das Fluid wiederum vom Druck P3 auf den Druck P4 gedrosselt. Am Ventilsitz 7 bzw. dem ersten Drosselkörper erfährt das Fluid eine erste Druckminderung von P1 auf P2, die je nach Stellung des Ventilelements 6 zum Ventilsitz 7 bzw. Vorgabe des Thermostatkopfs unterschiedlich ausfällt. Da jedoch über den Durchflussbegrenzer 40 bzw. den zweiten Drosselkörper vorteilhaft ein konstanter Differenzdruck vorliegen soll, wird im Durchflussregler 11, je nachdem welche Strömungsverhältnisse nach dem Ventilsitz 7 bzw. dem Thermostatventil 5 bzw. dem ersten Drosselkörper vorliegen, der Spalt zwischen dem Regelventilsitz 13 und dem Regelventilelement 12 eingestellt. Die Einstellung des Spalts zwischen dem Regelventilelement 12 und dem Regelventilsitz 13 richtet sich nach den Druckverhältnissen innerhalb der Ventilanordnung 1. So liegt am Einlass 3 der Regelventilanordnung 1 der Druck P1 an und der Druck im Fluid wird wie beschrieben je nach Stellung zwischen dem Ventilelement 6 und dem Ventilsitz 7 in einen Druck P2, der nach dem Ventilsitz 7 vorliegt, verändert. Die Membran 15 des Durchflussreglers 11 wird dabei mit dem Druck P2 auf einer Seite, die dem Ventilsitz 7 zugewandt bzw. nachgelagert, ist beaufschlagt und je nach Vorliegen des Drucks P2 in der Achse 9 der Ventilanordnung 1 automatisch verstellt. Über den Regelventilsitz 13 und das Regelelement 12 strömt sodann das Fluid in Richtung des Auslasses 4, wobei wieder über den Durchflussregler 11 bzw. den Regelventilsitz 13 eine Druckminderung (P3) des Fluids stattfindet. Das Fluid strömt dann über den Durchflussbegrenzer 40 bzw. den zweiten Drosselkörper in den Auslass 4. Der Auslass 4 ist mit einem Regelhohlraum 31 über einen im Gehäuse 2 ausgebildeten Druckkanal 16 verbunden, sodass in dem Regelhohlraum 31 der Druck P4, der auch im Auslass 4 vorliegt, herrscht. Im Regelhohlraum 31 ist die zweite Seite der Membran 15 angeordnet, sodass auf die Membran 15 auf der Seite des Ventilsitzes 7 der Druck P2 und auf der anderen Seite der Membran 15 im Regelhohlraum 31 der Druck P4, der auch im Auslass 4 herrscht, vorliegt. Die Membran 15 wird also je nach Druckverhältnis P2 zu P4 mit einer Kraft in Richtung der Achse 9 beaufschlagt, wobei entgegen der auf die Membran 15 einwirkenden Kraft des Drucks P2 die Federkraft einer Öffnungsfeder 17 des Durchflussreglers 11 wirkt. So bildet sich ein Kräftegleichgewicht zwischen dem Verhältnis des Drucks P2 und P4 an der Membran 15 einerseits und der Kraft der Öffnungsfeder 17 andererseits, was sodann die Stellung des Regelventilelements 12 im Verhältnis zum Regelventilsitz 13 bewirkt.

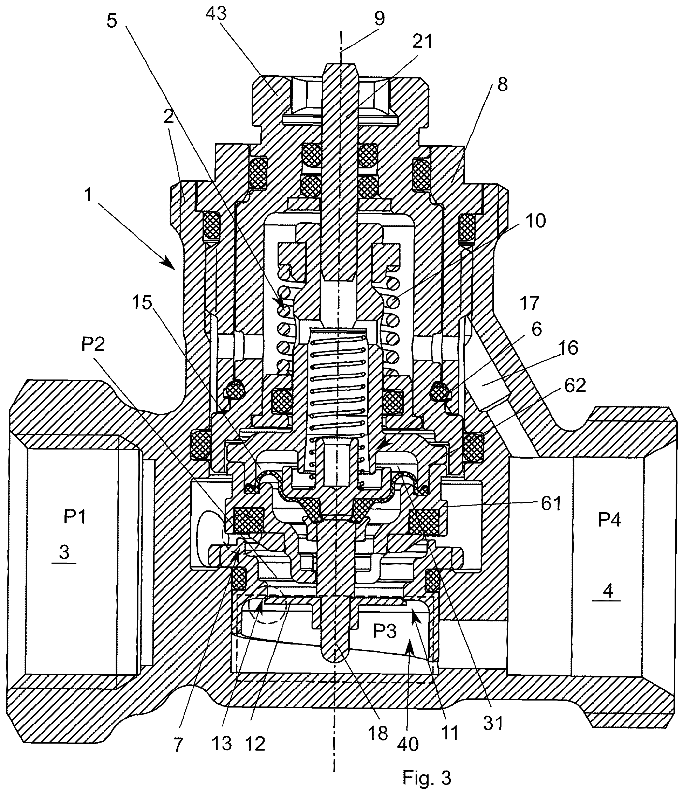

So zeigt Fig. 3 die erste Ausführungsform der Ventilanordnung 1 gemäß den Fig. 1 und 2 in einer Betriebsposition. Strömt also Fluid über den Einlass 3 ein, fließt dieses sodann zwischen dem Ventilsitz 7 und dem Ventilelement 6 bzw. den ersten Drosselkörper durch und erfährt dort eine erste Druckminderung vom Druck P1, der im Einlass 3 herrscht, auf den Druck P2. Das Fluid fließt sodann über den Regelventilsitz 13 zwischen dem Regelventilelement 12 hindurch und erfährt eine weitere Druckminderung vom Druck P2 auf den Druck P3. Vom Druck P3 auf den Druck P4 wird dann das Fluid über den zweiten Drosselkörper bzw. den Durchflussbegrenzer 40 gedrosselt und der Durchfluss durch die Ventilanordnung 1 eingestellt. Der Druck P4 liegt sodann, wie zuvor beschrieben, im Regelhohlraum 31 auf der zweiten Seite der Membran 15 an, wodurch die Stellung des Regelventilelements 12 durch die Bildung des Gleichgewichts zwischen dem auf der ersten Seite der Membran 15 anliegenden Drucks P2 im Verhältnis zum auf der zweiten Seite der Membran 15 anliegenden Drucks P4 und der Kraft der Öffnungsfeder 17. Abhängig von den Druckschwankungen des Drucks P1 im Einlass, welche im Heizungssystem auftreten, wird der Druck P2 direkt beeinflusst. Dementsprechend wird der Durchflussregler 11 mehr oder weniger drosseln bzw. wird der Spalt zwischen dem Regelventilelement 12 und dem Regelventilsitz 13 größer oder kleiner. Es liegt also nach dem Ventilsitz 7 ein größerer Druck P2 vor, der das Regelventilelement 12 entgegen der Kraft der Öffnungsfeder 17 in Richtung des Regelventilsitz 13 verstellt und dadurch einen geringen Spalt, wie in Fig. 3 dargestellt, zwischen dem Regelventilsitz 13 und dem Regelventilelement 12 erzeugt. Durch den geringen Spalt, von im Betrieb wenigen Zehntel-Millimeter, zwischen Regelventilsitz 13 und Regelventilelement 12 wird also ein größerer Differenzdruck zwischen den Drücken P2 und P4 erzeugt, wodurch in Summe der Differenzdruck über den Durchflussbegrenzer 40 bzw. den zweiten Drosselkörper, also der Druck P3 vor dem Durchflussbegrenzer 40 minus P4, dem Druck im Auslass 4 bzw. nach dem Durchflussbegrenzer 40 in unterschiedlichen Stellungen des Thermostatventils 5 und den Voreinstellungen des Durchflussbegrenzers 40 automatisch mittels des Druckventils 11 konstant gehalten wird.

Wie in Fig. 1 dargestellt, weist das Regelventilelement 12 keinerlei Dichtungen auf und ist lediglich über die Membran 15 und die Öffnungsfeder 17 geführt. Durch diese vorteilhafte Anordnung wirken keinerlei Dichtungskräfte entlang der Achse 9 des Regelventilelements 12 auf dieses ein, wodurch eine Hysterese bzw. Reibkräfte durch Dichtungen vermieden werden. Somit ist es besonders vorteilhaft möglich, die Druckverhältnisse über den Durchflussregler 11 bzw. den Differenzdruckregler genau und fein zu regeln. So passt sich automatisch der voreingestellte Durchfluss in Abhängigkeit von den Druckschwankungen im System bzw. den Gegebenheiten am Einlass 3 an. Die Membran 15 ist dabei in dem Ventilelement 6 eingespannt, das bei der Ausführungsform zweiteilig ausgebildet ist. Das Ventilelement 6 weist also zwei ineinander verschraubbare oder verklemmbare Schalen bzw. Teile 61, 62 auf, zwischen denen die Membran 15 eingeklemmt ist. Je nach Druckverhältnissen P2 zu P4 und der Kraft der Öffnungsfeder 17 wird also das Regelventilelement 12 in der Achse 9 relativ zum Gehäuse 2 und auch relativ zum Ventilelement 6 automatisch verstellt. Die beiden Teile 61, 62 des Ventilelements 6 sind dabei hohl ausgebildet, sodass das Regelventilelement 12 als auch die Öffnungsfeder 17 innerhalb der Teile 61, 62 des Ventilelements 6 angeordnet sind. Durch die Lagerung und Anordnung der Öffnungsfeder 17 als auch des Regelventilelements 12 innerhalb des Ventilelements 6 ermöglicht dies eine besonders kompakte Bauform, wodurch die einzelnen Bauteile, also die Öffnungsfeder 17 als auch die Membran 15 und das Regelventilelement 12, sehr klein sein können und dadurch die Kräfte auf das Regelventilelement 12 auch sehr gering gehalten werden können. So ist die Federkraft der Öffnungsfeder 17 in Betriebsposition sehr gering und die selbstständige bzw. automatische Regelung besonders genau. Aufgrund der geringen Federkraft ist ein geringer Differenzdruck notwendig und der Regler spricht früher als im Stand der Technik an. Dies führt einerseits zu einer besonders kompakten Bauform, aber andererseits auch zu einer genauen und sehr sensiblen Regelung des Differenzdrucks mittels des Durchflussreglers 11 bzw. des Differenzdruckreglers über den Durchflussbegrenzer 40 bzw. über den zweiten Drosselkörper. Insbesondere bei Heizungen oder Wärmetauschern, die nur einen geringen Durchfluss brauchen, ermöglicht dies eine sensible und besonders genaue Regelung. Hierzu wird der voreingestellte Durchfluss über die Ventilanordnung 1 konstant gehalten, unabhängig von der Druckschwankungen im Einlass 3.

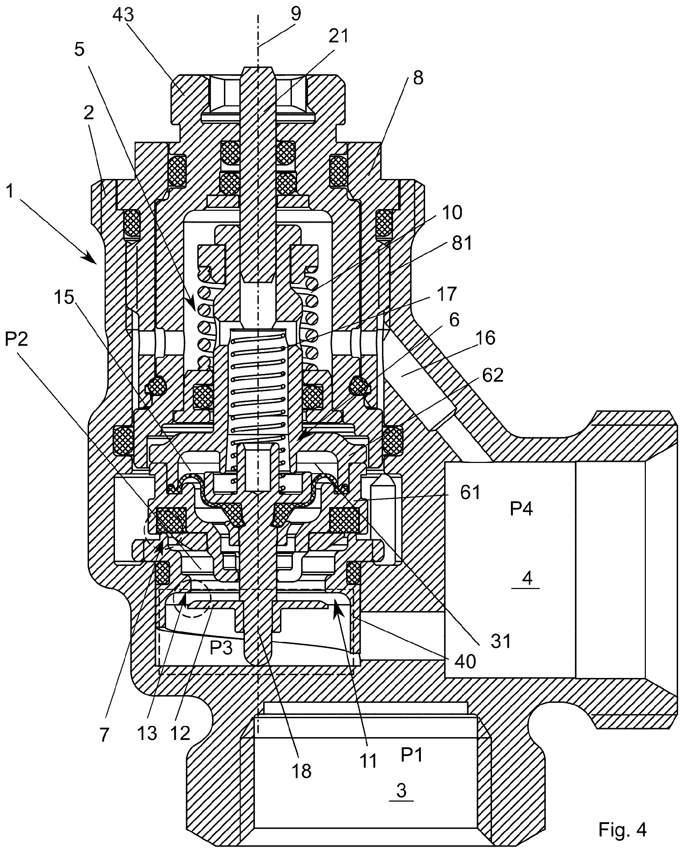

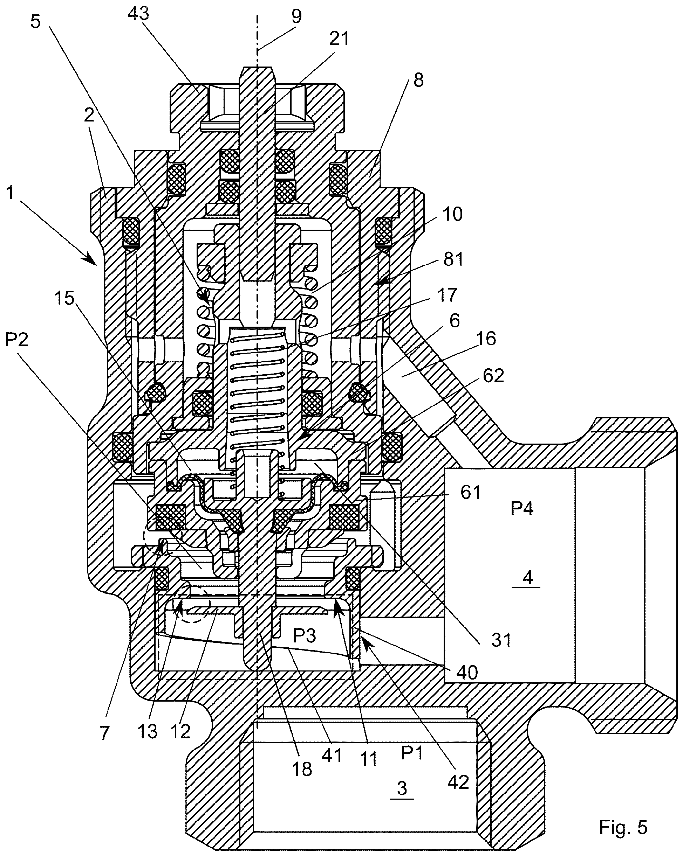

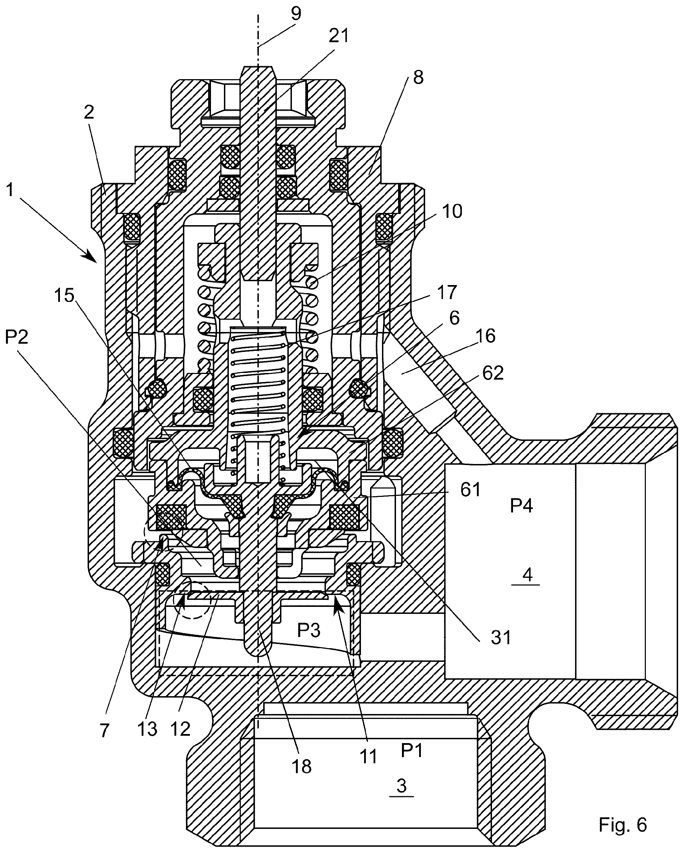

In den Fig. 4 bis 6 ist eine zweite Ausführungsform der erfindungsgemäßen Ventilanordnung 1 dargestellt. Die Ventilanordnung 1 ist dabei als sogenanntes Eckventil ausgebildet, wobei zwischen dem Einlass 3 und dem Auslass 4 eine Umlenkung des Fluids um 90° erzeugt wird. Die konstruktive Ausführung des Durchflussreglers 11 und des Thermostatventils 5 sind dabei ident zu der Ausbildung der ersten Ausführungsform gemäß den Fig. 1 bis 3. Wird also Fluid über den Einlass 3 zuerst dem Ventilsitz 7 zugeführt, erfährt dieses dabei eine Druckminderung auf den Druck P2 und wird dann über den Regelventilsitz 13 bzw. das Regelventilelement 12 und einer Druckminderung auf P3 und einer weiteren Druckminderung auf P4 am Durchflussbegrenzer 40 dem Auslass 4 mit einem Druck P4 zugeführt. Wie bereits bei den Fig. 1 bis 3 wird auch der Druck P4 über einen Druckkanal 16 dem Regelhohlraum 31 zugeführt, wodurch die Druckdifferenz P2 minus P4 und die Kraft der Öffnungsfeder 17 die Stellung des Regelventilelements 12 zum Regelventilsitz 13 und damit den Differenzdruck über die den Durchflussbegrenzer 40 bzw. den zweiten Drosselkörper bewirkt.

Optional kann bei den Ausführungsformen der Fig. 1 bis 6 das Thermostatventil 5 in einer Kartusche 8 angeordnet bzw. ausgebildet sein, sodass das Thermostatventil 5 vollständig in dieser Kartusche 8 sitzt. Wie in den Fig. 1 bis 6 schematisch dargestellt, ist das Ventilelement 6 in der Kartusche 8 mit dieser koaxial in der Achse 9 angeordnet. Über einzelne Hülsen wird das Ventilelement 6 geführt und die einzelnen Komponenten in der Kartusche 8 verbaut bzw. daran befestigt. Durch die vorteilhafte Anordnung des Regelventilelements 12 innerhalb des Ventilelements 6 ist also der Durchflussregler 11 ebenfalls in der Kartusche 8 befestigt und somit kann beim Ausbringen der Kartusche 8 aus dem Gehäuse 2 sowohl das Thermostatventil 5 als auch der Durchflussregler 11 vollständig aus dem Gehäuse 2 entfernt werden. Der Ventilsitz 7 als auch der Regelventilsitz 13 sind dabei gemeinsam in einer Steckhülse 23 (Fig. 1) angeordnet, die ebenfalls in der Kartusche 8 angeordnet bzw. an dieser befestigt sind. Wird also die Kartusche 8, wie optional in den Fig. 1 bis 6 dargestellt, über das Gewinde 81 (Fig. 1, Fig. 4) aus dem Gehäuse 2 ausgeschraubt, werden sowohl die einzelnen Elemente des Durchflussreglers 11 als auch des Thermostatventils 5 mit der Kartusche 8 aus dem Gehäuse 2 entnommen. Dies ermöglicht, dass sowohl das Thermostatventil 5 als auch der Durchflussregler 11 einfach außerhalb des Gehäuses 2 montiert werden können und sodann nur noch mehr mit der Kartusche 8 in das Gehäuse 2 in die Ventilanordnung 1 eingebracht werden müssen. Dies bewirkt eine besonders vorteilhafte und einfache Montage, ohne innerhalb des Gehäuses 2 der Ventilanordnung 1 filigrane Arbeiten durchführen zu müssen.

In einer vorteilhaften Ausführungsform kann zusätzlich der Durchflussregler 11 in einem Einsatz ausgebildet sein, der sodann lediglich in die Kartusche 8 bzw. in das Thermostatventil 5 eingebracht wird. So kann beispielsweise der Einsatz direkt in das Regelventilelement 12 eingebracht werden, sodass beispielsweise das Regelventilelement 12, der Regelventilsitz 13 sowie die Öffnungsfeder 17 nur in das Thermostatventil 5 bzw. dessen Ventilelement 6 eingelegt werden müssen.

In einer optionalen Ausführungsform weist das Regelventilelement 12 einen Begrenzungsfortsatz 18 auf. Durch den Begrenzungsfortsatz 18 wird die maximale Öffnung des Durchflussreglers 11 bzw. des Regelventilelements 12 begrenzt.

In einer nicht dargestellten alternativen Ausführungsform der erfindungsgemäßen Ventilanordnung 1 weist diese keinen Durchflussbegrenzer 40 auf. Aus dem Raum hinter dem Durchflussregler 11 fließt dann das Fluid direkt dem Auslass 4 über das Durchtrittsfenster 42 zu. Es wird damit das Fluid auch im Wesentlichen keiner weiteren Druckminderung von P3 unterzogen, sondern der Druck P4 entspricht dann dem Druck P3.

In der bevorzugten Ausführungsform der Fig 1 bis 3 bzw. 4 bis 6 ist das Regelventilelement 12 in Flussrichtung des Fluids nach dem Regelventilsitz 13 angeordnet. Das Regelventilelement 12 öffnet dabei in Richtung der Flussrichtung des Fluids, bewegt sich also bei der Öffnung in Flussrichtung und hebt in Flussrichtung des Fluids vom Regelventilsitz 13 ab. Das Regelventilelement 12 weist dabei optional einen tellerförmigen Abschnitt auf, der auf dem Regelventilsitz 13 in Flussrichtung des Fluids nach diesem aufliegt und den Durchgangsquerschnitt des Regelventilsitzes 13 im geschlossenen Zustand abdeckt bzw. diesen bei der Regelung teilweise freigibt. Bei einem Riss der Membran 15 oder deren Versagen, beispielsweise wenn diese die elastischen Eigenschaften verliert, steht der Druck des Fluides nach dem Thermostatventil 5 bzw. dem ersten Drosselkörper am tellerförmigen Abschnitt des Regelventilelements 12 an und drückt dieses in die Offenstellung. So kann bei Versagen der Membran 15 das Regelventilelement 12 trotzdem geöffnet bzw. offengehalten werden und die Ventilanordnung 1 erlaubt weiter, dass Fluid durch dieses bei Öffnen des Thermostatkopfes bzw. des Thermostatventils 5 durchtritt. Lediglich die Funktion des Durchflussreglers 11 ist nicht mehr gewährleistet, aber es wird weiterhin Fluid den Verbrauchern zur Verfügung gestellt und die Räume weiter, wenn auch mit schlechterer Regelung, beheizt.

Bei dem geschlossenen Thermostatventil 5 gleicht sich der Druck P2, P3 und P4 in den unterschiedlichen Abschnitten der Ventilanordnung 1 aus, sodass die Drücke P2, P3 und P4 gleich sind. Durch die erfindungsgemäße Anordnung der Membran 15 wird diese beidseitig mit gleichem Druck beaufschlagt und die Membran 15 ist bei geschlossenem Thermostatventil 5 in einem entspannten Zustand. Dementsprechend wird die Membran 15 geschont und nicht nur ständig von einer Seite mit größerem Druck beaufschlagt.

Mit der Anordnung des Thermostatventil 5 vor dem automatischen Durchflussregler 11 wird weiters auch verhindert, dass es bei der beschädigten Membran 15 des geschlossenen Thermostatventils 5 zu einer Leckage bzw. zu einer unerwünschten und nicht bemerkten weiteren Versorgung des Verbrauchers kommt.

## Patentansprüche

1. Ventilanordnung (1) zur Steuerung eines Stroms eines Heiz- oder Kühlfluids; insbesondere zu einem Heizkörper oder Wärmetauscher, umfassend:
- ein Gehäuse (2) mit einem Einlass (3) und einem Auslass (4), wobei zwischen Einlass (3) und Auslass (4) ein Thermostatventil (5) mit einem Ventilelement (6) und einem Ventilsitz (7), die einen ersten Drosselkörper ausgebilden, angeordnet ist und
- einen Durchflussregler (11), der zwischen dem Einlass (3) und dem Auslass (4) angeordnet ist und ein Regelventilelement (12) und einen Regelventilsitz (13) aufweist, wobei der Durchflussregler (11) die Druckdifferenz zwischen dem ersten Drosselkörper und dem Auslass (4) und damit den Durchfluss bei einem spezifischen Hub des Thermostatventils (5) aus dem Auslass (4) konstant hält,
**dadurch gekennzeichnet, dass** der Durchflussregler (11) als Differenzdruckregler ausgebildet ist, der dem Thermostatventil (5) in Strömungsrichtung des Fluids nachgeordnet ist, und
dass der Durchflussregler (11) eine Membran (15) zur Einstellung des Differenzdrucks aufweist, an der das Regelventilelement (12) mit dieser verschieblich angeordnet ist.

2. Ventilanordnung (1) nach Anspruch 1, **dadurch gekennzeichnet, dass** das Regelventilelement (12) frei von Dichtungen in dem Thermostatventil (5) verschieblich gelagert angeordnet ist.

3. Ventilanordnung (1) nach Anspruch 1 oder 2, **dadurch gekennzeichnet, dass** die Ventilanordnung (1) einen Durchflussbegrenzer (40) aufweist, mit dem der Durchfluss über die Ventilanordnung (1) begrenzbar ist, wobei der Durchflussbegrenzer (40) dem Durchflussregler (11) nachgeschaltet ist.

4. Ventilanordnung (1) nach einem der vorangehenden Ansprüche, **dadurch gekennzeichnet, dass** das Regelventilelement (12) koaxial zu dem Ventilelement (6) angeordnet und in Richtung von dessen Achse (9) verschieblich, relativ zum Ventilelement (6) beweglich angeordnet ist.

5. Ventilanordnung (1) nach einem der vorangehenden Ansprüche, **dadurch gekennzeichnet, dass** das Thermostatventil (5) vollständig in einer Kartusche (8) angeordnet ist, die aus dem Gehäuse (2), insbesondere von einer einzigen Seite der Ventilanordnung (1), herausnehmbar ausgebildet ist, sodass durch Entfernen der Kartusche (8) das Thermostatventil (5) vollständig aus dem Gehäuse (2) herausnehmbar ist.

6. Ventilanordnung (1) nach einem der vorangehenden Ansprüche, **dadurch gekennzeichnet, dass** der Durchflussregler (11) als Einsatz ausgebildet ist, der im Thermostatventil (5), insbesondere im Regelventilelement (12), angeordnet ist.

7. Ventilanordnung (1) nach einem der vorangehenden Ansprüche, **dadurch gekennzeichnet, dass** die Membran (15) zwischen dem Ventilelement (6) und dem Regelventilelement (12) angeordnet ist.

8. Ventilanordnung (1) nach einem der vorangehenden Ansprüche, **dadurch gekennzeichnet, dass** eine Seite der Membran (15) des Durchflussreglers (11) in Strömungsrichtung des Fluids nach dem Ventilsitz (7) des Thermostatventil (5) angeordnet ist und mit dem Druck (P2), der nach dem Ventilsitz (7) des Thermostatventils (5) vorliegt, beaufschlagbar ist und dass die zweite Seite der Membran (15) mit einem Druckkanal (16) mit dem Auslass (4) druckübertragend verbunden ist und mit dem Druck (P3 oder P4) im Auslass beaufschlagbar ist.

9. Ventilanordnung (1) nach einem der vorangehenden Ansprüche, **dadurch gekennzeichnet, dass** die Öffnungsrichtung des Regelventilelements (12) der Strömungsrichtung des Fluids über den Durchflussregler (11) entspricht, sodass bei einem Riss oder Versagen der Membran (15) das Regelventilelement (12) durch den Druck des Fluids nach dem geöffneten Thermostatventil (5) in die geöffnete Position drückbar ist und der Durchflussregler (11) geöffnet bleibt.

10. Ventilanordnung (1) nach einem der vorangehenden Ansprüche, **dadurch gekennzeichnet, dass** der Durchflussregler (11) eine Öffnungsfeder (17) aufweist, mit der das Regelventilelement (12) in Öffnungsrichtung mit einer Federkraft beaufschlagbar ist, wobei die Öffnungsfeder (17) zwischen dem Regelventilelement (12) und dem Ventilelement (6) angeordnet und in einer im Ventilelement (6) zentral ausgebildeten Öffnung abgestützt ist.

11. Ventilanordnung (1) nach einem der vorangehenden Ansprüche, **dadurch gekennzeichnet, dass** das Regelventilelement (12) einen Begrenzungsfortsatz (18) aufweist, der die maximale Öffnung der Durchflussregler (11) begrenzt.

12. Ventilanordnung (1) nach einem der vorangehenden Ansprüche, **dadurch gekennzeichnet, dass** die Membran (15) derart im Thermostatventil (5) angeordnet ist, dass bei geschlossenem Thermostatventil (5) die Membran (15) beidseitig mit demselben Druck belastet ist und die Membran (15) in unbelastetem Zustand vorliegt.
